# EUROPÄISCHE PATENTSCHRIFT

(11) **EP 2 005 114 B1**
(45) Veröffentlichungstag und Bekanntmachung des Hinweises auf die Patenterteilung: **17.02.2016**
(21) Anmeldenummer: 07723050.6
(22) Anmeldetag: 06.03.2007
(51) Int. Cl.: G01C 21/26, G01C 21/36, G08G 1/0968

(54) **NAVIGATIONSANORDNUNG UND NAVIGATIONSVERFAHREN FÜR EIN KRAFTFAHRZEUG**
NAVIGATION ASSEMBLY FOR A MOTOR VEHICLE
SYSTÈME DE NAVIGATION DESTINÉ À UN VÉHICULE

(30) Priorität: 31.03.2006 US 395705; 11.05.2006 US 800222 P; 22.05.2006 US 439315; 21.06.2006 US 472622
(43) Veröffentlichungstag der Anmeldung: 24.12.2008
(73) Patentinhaber: Volkswagen Aktiengesellschaft, 38440 Wolfsburg (DE)
(72) Erfinder: NG, Brian, San Francisco, CA 94108 (US); ROSARIO, Daniel, Santa Cruz, CA 95060 (US); CHAN, Thomas, Mountain View, CA 94040 (US); STOSCHEK, Arne, Palo Alto, CA 94303 (US); LEE, Chu, Hee, San Jose, CA 95129 (US)
(86) Internationale Anmeldenummer: PCT/EP2007/001905
(87) Internationale Veröffentlichungsnummer: WO 2007/115615

(56) Entgegenhaltungen:
- EP-A2- 1 033 692
- US-A1- 2001 019 309
- US-A1- 2005 222 760

## Beschreibung

Die Erfindung betrifft eine Navigationsanordnung für ein Kraftfahrzeug.

Die EP 0 875 730 B1 und die DE 698 15 940 T2 offenbaren ein Landkarteninformationsanzeigegerät zur Verwendung in einer Fahrzeugnavigationsvorrichtung mit einer Datenumsetzungseinrichtung zum Erfassen von Punkten von Kartendaten entsprechend einer Landkarte von einem Standpunkt durch eine Betrachtungslinie, die von dem Standpunkt ausgeht und bezüglich der Ebene der Landkarte einen Tiefenwinkel besitzt, und zum perspektivischen Projizieren der Punkte der Kartendaten auf eine Betrachtungsebene, die senkrecht zu der Betrachtungslinie festgelegt ist und einen vorgegebenen Abstand von dem Standpunkt besitzt, um Landkarten-Anzeigedaten zu erzeugen. Dabei wird eine Ansicht einer Umgebung aus der Vogelperspektive erzeugt. Ein Navigationssystem mit einer Ansicht einer Umgebung aus der Vogelperspektive ist zudem in der FR 2634707 sowie in der Zeitschrift autoconnect 2005, Vereinigte Motor-Verlage GmbH & Co. KG, Leuschnerstr. 1, 70174 Stuttgart, Deutschland, Seiten 18 und 21 offenbart.

Die EP 0 990 119 B1 offenbart eine digitale Personal-Kommunikationsvorrichtung mit einem Prozessor, mit einem Speicher, auf den der Prozessor zugreifen kann, und mit einer Anzeige, die mit dem Prozessor verbunden ist, wobei die Anzeige Karteninformationen und eine Position der digitalen Personal-Kommunikationsvorrichtung bezüglich der Karteninformation anzeigt, wobei die Karteninformation Wegpunkte, also Koordinaten, enthält, wie vom Prozessor angewiesen. Die digitale Personal-Kommunikationsvorrichtung umfasst zudem eine Eingabeeinrichtung zum Bilden von Anfragen für Karteninformation und zum Auswählen von Wegpunkten und einen GPS-Empfänger, der mit dem Prozessor verbunden ist, wobei der Prozessor so programmiert ist, dass er Informationen, die er vom GPS-Empfänger erhält, so verarbeitet, dass daraus die Position der digitalen Personal-Kommunikationsvorrichtung bestimmt wird. Außerdem umfasst die digitale Personal-Kommunikationsvorrichtung einen Sender, der mit dem Prozessor verbunden ist, wobei der Prozessor so programmiert ist, dass er Karteninformation unter Verwendung des Senders von einem Kartenspeicher und einer Übertragungsvorrichtung anfordert, dass er die Karteninformation, die er vom Kartenspeicher und der Übertragungsvorrichtung erhalten hat, weiterverarbeitet, und dass er die Verfügbarkeit zusätzlicher gespeicherter Daten für Wegpunkte im Speicher bei Auswahl einer der Wegpunkte durch die Eingabeeinrichtung bestimmt, und dass er zusätzliche gespeicherte Daten unter Verwendung des Senders von dem Kartenspeicher und der Übertragungsvorrichtung bei Auswahl eines der Wegpunkte anfordert, falls zusätzliche gespeicherte Daten nicht im Speicher verfügbar sind.

Die EP 1 033 692 A2 offenbart ein Verfahren zum Ausgeben von Verkehrsinformationen in einem Kraftfahrzeug. Dabei wird den Verkehrsmeldungen eine Relevanz bezüglich der vom Kraftfahrzeug befahrenen Strecke zugeteilt und die Verkehrsmeldungen in Abhängigkeit von der Relevanz an den Fahrer ausgegeben.

Schließlich offenbart die US 2001/0019309 A1 eine Landkartenübertragungsvorrichtung. Dabei wird die Landkarte in Teile unterteilt, welche entsprechend einer ihnen zugeteilten Priorität übertragen werden.

Es ist Aufgabe der Erfindung, die Navigation eines Kraftfahrzeuges zu verbessern.

Vorgenannte Aufgabe wird durch eine Navigationsanordnung für ein Kraftfahrzeug gelöst, wobei die Navigationsanordnung ein Kraftfahrzeug, einen räumlich von dem Kraftfahrzeug getrennten Server und eine drahtlose Kommunikationsverbindung zwischen dem Server und dem Kraftfahrzeug zur zeitlich versetzten Übertragung einer ersten Navigationsinformation und zumindest einer zweiten Navigationsinformation von dem Server an das Kraftfahrzeug umfasst, wobei der ersten Navigationsinformation eine erste Priorität und der zweiten Navigationsinformation eine zweite (von der ersten Priorität verschiedene) Priorität zugeordnet ist, wobei die Reihenfolge der Übertragung der ersten Navigationsinformation und der zweiten Navigationsinformation abhängig von der Höhe der Priorität ist, und wobei in dem Kraftfahrzeug eine Mensch-Maschine-Schnittstelle zur Ausgabe der ersten Navigationsinformation und der zweiten Navigationsinformation an einen Bediener des Kraftfahrzeuges angeordnet ist. Dabei ist insbesondere vorgesehen, dass eine Navigationsinformation mit einer hohen Priorität vor einer Navigationsinformation mit einer niedrigen Priorität übertragen wird.

Erfindungsgemäß ist die Priorität einer Navigationsinformation abhängig von deren Wiedererkennungswert. Dabei ist einer Navigationsinformation mit einem hohen Wiedererkennungswert eine höhere Priorität zugeordnet als einer Navigationsinformation mit einem geringen Wiedererkennungswert, wobei ein hoher Wiedererkennungswert eine gewisse Eigentümlichkeit bzw. ein optisches Hervorstechen ist. Eine Navigationsinformation mit einem hohen Wiedererkennungswert im Sinne der Erfindung soll insbesondere eine Navigationsinformation sein, die einen besonders guten Anhalt für eine Orientierung bietet. Eine Navigationsinformation mit einem hohen Wiedererkennungswert im Sinne der Erfindung soll insbesondere eine Navigationsinformation sein, die sich deutlich von ihrer Umgebung unterscheidet. Dabei ist insbesondere auch vorgesehen, dass Landmarks mit einem hohen Wiedererkennungswert detaillierter dargestellt werden als Landmarks mit einem geringen Wiedererkennungswert. So kann z.B. das Transamerika-Gebäude in San Francisco detaillierter abgebildet werden als ein üblicher Wohnblock.

Eine Navigationsinformation im Sinne der Erfindung umfasst insbesondere eine Kartendarstellung sowie eine ein Navigationssystem betreffende Information zur ergänzenden Darstellung in der Kartendarstellung. Eine Navigationsinformation im Sinne der Erfindung umfasst insbesondere einen Streckenatlas, eine graphische Kartendarstellung sowie eine ein Navigationssystem betreffende Information zur ergänzenden Darstellung in der Kartendarstellung zusammen mit einer Position des Kraftfahrzeuges und/oder einem Routenvorschlag für das Kraftfahrzeug. Eine Navigationsinformation im Sinne der Erfindung ist insbesondere eine ein Navigationssystem betreffende Information, die von ihrer Natur her unabhängig von einer Position des Kraftfahrzeuges und/oder einem Routenvorschlag für das Kraftfahrzeug ist. Dabei kann jedoch vorgesehen sein, dass die ihr zugeordnete Priorität abhängig von der Position des Kraftfahrzeuges und/oder dem Routenvorschlag für das Kraftfahrzeug ist. Eine Navigationsinformation im Sinne der Erfindung ist insbesondere eine ein Navigationssystem betreffende Information jedoch insbesondere nicht die Position des Kraftfahrzeuges. Eine Navigationsinformation im Sinne der Erfindung ist insbesondere eine ein Navigationssystem betreffende Information jedoch insbesondere nicht ein Routenvorschlag für das Kraftfahrzeug. Eine Navigationsinformation im Sinne der Erfindung kann z.B. eine Information über einen Point-Of-Interest, eine graphische Darstellung eines Points-Of-Interest oder eines Landmarks und/oder ein Ausschnitt einer Kartendarstellung sein. Eine derartige Kartendarstellung kann eine Karte, ein Satellitenbild oder eine 3D-Graphik sein. Die Karte, das Satellitenbild bzw. die 3D-Graphik kann dabei z.B. in Draufsicht, in Vogelperspektive oder in first-person-view dargestellt werden.

Eine drahtlose Kommunikationsverbindung im Sinne der Erfindung kann auch einen nicht drahtlosen Abteil umfassen. Eine drahtlose Kommunikationsverbindung im Sinne der Erfindung ist insbesondere eine Kommunikationsverbindung, die zumindest zum Kraftfahrzeug drahtlos ist. Eine drahtlose Kommunikationsverbindung im Sinne der Erfindung ist insbesondere eine drahtlose Verbindung ins Internet (z.B. WLAN). Drahtlose Kommunikationsverbindungen können auch WIFI, WIMAX, RF, Mobilfunk, etc. sein. Es kann vorgesehen sein, dass - abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc..

Eine zeitlich versetzte Übertragung einer ersten Navigationsinformation und einer zweiten Navigationsinformation soll im Sinne der Erfindung bedeuten, dass eine Navigationsinformation vor der anderen Navigationsinformation übertragen wird.

In einer Ausgestaltung der Erfindung ist die Priorität einer Navigationsinformation abhängig von ihrer Erneuerungsrate oder ihrer üblichen Erneuerungsrate. Dabei kann insbesondere vorgesehen sein, dass den Navigationsinformationen mit einer hohen Dynamik eine höhere Priorität zugeordnet ist. So können z.B. Verkehrsinformationen und Informationen über die Verfügbarkeit von Parkplätzen hohe Prioritäten zugeordnet werden.

In einer weiteren Ausgestaltung der Erfindung ist die Priorität einer Navigationsinformation abhängig von ihrer Größe. Dabei kann insbesondere vorgesehen sein, dass den Navigationsinformationen mit einer geringen Bandbreite bzw. Größe eine höhere Priorität zugeordnet ist. So können z.B. Verkehrsinformationen, Informationen über die Verfügbarkeit von Parkplätzen und Informationen über Points-Of-Interest aufgrund ihrer geringeren Größe höhere Prioritäten zugeordnet werden als einer Kartendarstellung. In Bezug auf eine Kartendarstellung kann z.B. vorgesehen sein, dass eine zweidimensionale Karte eine höhere Priorität besitzt als eine dreidimensionale Vektor-Kartendarstellung. In Bezug auf eine Kartendarstellung kann darüber hinaus z.B. vorgesehen sein, dass eine dreidimensionale Vektor-Kartendarstellung eine höhere Priorität besitzt als ein Satellitenbild oder eine photorealistische (dreidimensionale) Kartendarstellung.

In einer Ausgestaltung der Erfindung ist die Priorität einer Navigationsinformation abhängig von deren Abstand zur Position des Kraftfahrzeuges und/oder von deren Abstand zu einem Routenvorschlag für das Kraftfahrzeug. Dies ist insbesondere für Kartendarstellungen vorgesehen.

In einer weiteren Ausgestaltung der Erfindung ist die Priorität einer Navigationsinformation abhängig von deren Sicherheitsrelevanz. Dabei kann insbesondere vorgesehen sein, dass den Navigationsinformationen mit Sicherheitsrelevanz eine höhere Priorität zugeordnet ist.

In einer weiteren Ausgestaltung der Erfindung ist die Priorität einer Navigationsinformation von einem Bediener einstellbar. In einer weiteren Ausgestaltung der Erfindung ist die Priorität einer Navigationsinformation abhängig von einem Benutzerprofil.

In einer weiteren Ausgestaltung der Erfindung umfasst die Mensch-Maschine-Schnittstelle einen Monitor.

In einer weiteren Ausgestaltung der Erfindung umfasst das Kraftfahrzeug ein Navigationssystem.

In einer weiteren Ausgestaltung der Erfindung sind die erste Navigationsinformation und die zweite Navigationsinformation kodiert, wobei das Kraftfahrzeug einen Dekodierer zum Dekodieren der ersten kodierten Navigationsinformation und der zweiten kodierten Navigationsinformation umfasst, und wobei die Reihenfolge des Dekodierens der ersten Navigationsinformation und der zweiten Navigationsinformation abhängig von der Höhe der Priorität ist. Dabei ist insbesondere vorgesehen, dass eine Navigationsinformation mit einer hohen Priorität vor einer Navigationsinformation mit einer niedrigen Priorität dekodiert wird. Eine kodierte Navigationsinformation ist im Sinne der Erfindung insbesondere eine komprimierte Navigationsinformation. Ein Dekodieren einer kodierten Navigationsinformation ist im Sinne der Erfindung insbesondere ein Dekomprimieren einer komprimierten Navigationsinformation.

In einer weiteren Ausgestaltung der Erfindung umfasst das Kraftfahrzeug einen Speicher mit einer Kartendarstellung. Diese Kartendarstellung kann z.B. ersatzweise für die erste Navigationsinformation und/oder die zweite Navigationsinformation zur Anzeige gebracht werden, wenn die entsprechende Navigationsinformation (noch) nicht zur Verfügung steht.

In einer weiteren Ausgestaltung der Erfindung ist der Server als off-board-Navigationssystem zur Berechnung eines Routenvorschlags für das Kraftfahrzeug ausgestaltet. Dabei ist der Routenvorschlag in einer weiteren Ausgestaltung der Erfindung zur Übertragung vor der ersten Navigationsinformation und der zweiten Navigationsinformation vorgesehen.

In einer weiteren Ausgestaltung der Erfindung sind die erste Navigationsinformation und die zweite Navigationsinformation kodiert, wobei das Kraftfahrzeug einen Dekodierer zum Dekodieren der ersten kodierten Navigationsinformation und der zweiten kodierten Navigationsinformation umfasst, und wobei die Reihenfolge des Dekodierens der ersten Navigationsinformation und der zweiten Navigationsinformation abhängig von der Höhe der Priorität ist. Dabei ist insbesondere vorgesehen, dass eine Navigationsinformation mit einer hohen Priorität vor einer Navigationsinformation mit einer niedrigen Priorität dekodiert wird.

In einer weiteren Ausgestaltung der Erfindung umfasst das Kraftfahrzeug weiterhin einen Speicher mit einer Kartendarstellung.

Vorgenannte Aufgabe wird zudem durch ein Verfahren zur Unterstützung der Navigation eines Kraftfahrzeuges gelöst, wobei eine erste Priorität einer ersten Navigationsinformation und eine zweiten Priorität einer zweiten (von der ersten Priorität verschiedenen) Navigationsinformation zugeordnet wird, wobei die erste Navigationsinformation und die zweite Navigationsinformation zeitlich versetzt an das Kraftfahrzeug übertragen werden, und wobei die Reihenfolge der Übertragung der ersten Navigationsinformation und der zweiten Navigationsinformation in Abhängigkeit der Höhe der Priorität erfolgt. Dabei ist insbesondere vorgesehen, dass eine Navigationsinformation mit einer hohen Priorität vor einer Navigationsinformation mit einer niedrigen Priorität übertragen wird.

In einer Ausgestaltung der Erfindung erfolgt eine Ausgabe der ersten Navigationsinformation und/oder der zweiten Navigationsinformation an einen Bediener des Kraftfahrzeuges.

In einer weiteren Ausgestaltung der Erfindung wird die Priorität einer Navigationsinformation in Abhängigkeit von ihrer Erneuerungsrate oder ihrer üblichen Erneuerungsrate und/oder ihrer Größe bestimmt. In einer weiteren Ausgestaltung der Erfindung wird die Priorität einer Navigationsinformation in Abhängigkeit von deren Abstand zur Position des Kraftfahrzeuges und/oder von deren Abstand zu einem Routenvorschlag für das Kraftfahrzeug bestimmt.

In einer weiteren Ausgestaltung der Erfindung wird die Priorität einer Navigationsinformation in Abhängigkeit von deren Wiedererkennungswert und/oder in Abhängigkeit von deren Sicherheitsrelevanz und/oder in Abhängigkeit von einem Benutzerprofil bestimmt.

In einer weiteren Ausgestaltung der Erfindung werden die erste Navigationsinformation und die zweite Navigationsinformation vor ihrer Übertragung an das Kraftfahrzeug kodiert und die erste kodierte Navigationsinformation und die zweite kodierte Navigationsinformation nach deren Übertragung an das Kraftfahrzeug dekodiert, wobei die Reihenfolge des Dekodierens der ersten Navigationsinformation und der zweiten Navigationsinformation in Abhängigkeit der Höhe der Priorität erfolgt.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten in Bezug auf die Erfindung ergeben sich aus der nachfolgenden Beschreibung von Ausführungsbeispielen.
- Fig. 1: zeigt ein Ausführungsbeispiel einer Navigationsanordnung für ein Kraftfahrzeug;
- Fig. 2: zeigt ein Ausführungsbeispiel eines Kraftfahrzeuges mit einem Navigationssystem in einer Prinzipdarstellung;
- Fig. 3: zeigt ein Ausführungsbeispiel eines Verfahrens zur Unterstützung der Navigation eines Kraftfahrzeuges;

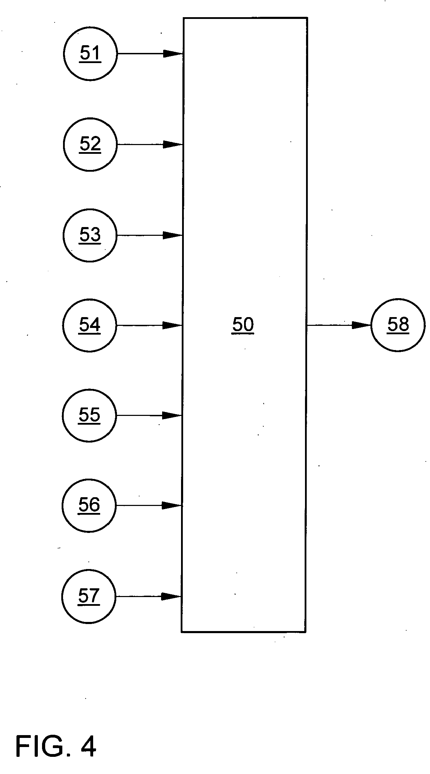

- Fig. 4: zeigt ein Ausführungsbeispiel eines Priorisierers;
- Fig. 5: zeigt ein Ausführungsbeispiel für eine Priorisierung von Kartenausschnitten;
- Fig. 6: zeigt einen beispielhaften Datenfluss;
- Fig. 7: zeigt ein Ausführungsbeispiel einer Draufsicht-Darstellung einer in eine 3D-Graphik integrierten Route mittels eines Touchscreens;
- Fig. 8: zeigt ein Ausführungsbeispiel einer Vogelperspektive-Darstellung einer in eine 3D-Graphik integrierten Route mittels eines Touchscreens;
- Fig. 9: zeigt ein Ausführungsbeispiel einer Anzeige einer Eingabemaske zur Eingabe eines Start- und eines Zielortes mittels eines Touchscreens;
- Fig. 10: zeigt ein Ausführungsbeispiel einer Anzeige einer Eingabemaske zur Auswahl eines Zielortes mittels eines Touchscreens;
- Fig. 11: zeigt ein Ausführungsbeispiel einer Anzeige zur Auswahl bevorzugter Routen mittels eines Touchscreens;
- Fig. 12: zeigt ein Ausführungsbeispiel einer Anzeige einer Routenübersicht mittels eines Touchscreens;
- Fig. 13: zeigt ein Ausführungsbeispiel einer Anzeige zur Bestätigung einer Spracheingabe mittels eines Touchscreens;
- Fig. 14: zeigt ein Ausführungsbeispiel einer Anzeige eines durch Informationen ergänzten Satellitenbildes mittels eines Touchscreens; und
- Fig. 15: zeigt ein Ausführungsbeispiel eines Ausschnittes einer Anzeige eines Routenvorschlags zusammen mit einer follow-me-Funktion.

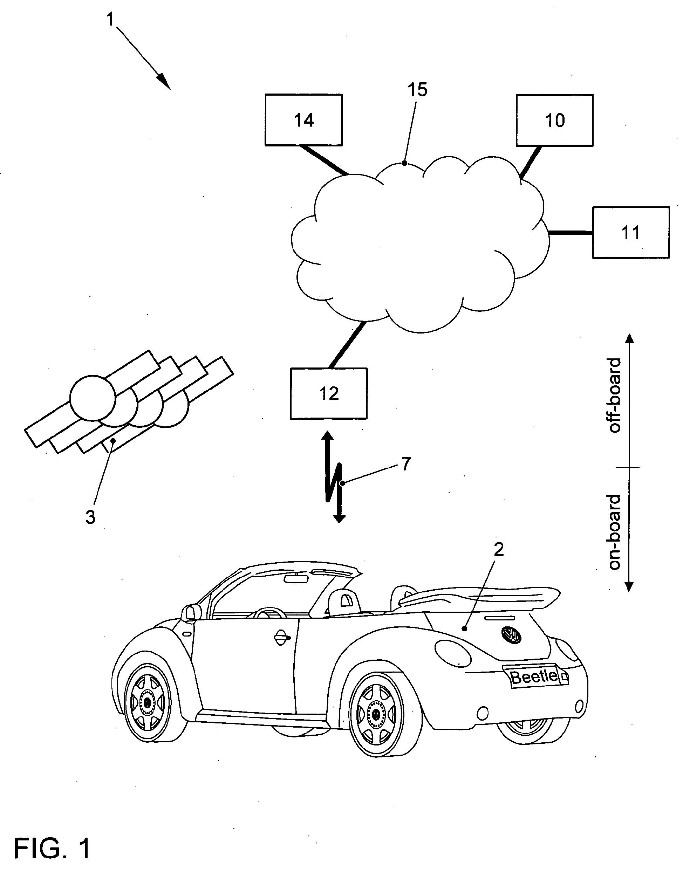

Fig. 1 zeigt ein Ausführungsbeispiel einer Navigationsanordnung 1 für ein Kraftfahrzeug 2. Die Navigationsanordnung 1 umfasst einen räumlich von dem Kraftfahrzeug 2 getrennten Server 10 mit Zugang zum Internet 15. Der Server 10 kann ein Ausführungsbeispiel für ein off-board-Navigationssystem im Sinne der Ansprüche sein. Dabei kann insbesondere vorgesehen sein, dass mittels des Servers 10 eine Berechnung eines Routenvorschlags (Soll-Route zu einem Ziel und/oder Soll-Fahrtrichtungsangabe) für das Kraftfahrzeug 2 erfolgt. Ein solcher Routenvorschlag kann abhängig vom aktuellen Verkehr, von Baustellen, von Wetter- bzw. Umweltbedingungen und/oder von Sichtverhältnissen sein. Der Routenvorschlag kann auch abhängig von persönlichen Präferenzen (interessante Routen, Landmarks, Einkaufsgebiete) sein.

Die Navigationsanordnung 1 umfasst weiterhin eine drahtlose Internetverbindung zwischen dem Kraftfahrzeug 2 und dem Server 10 zum Übertragen einer Navigationsinformation, wie z.B. einem Streckenatlas, einer graphischen Kartendarstellung sowie einer ein Navigationssystem betreffenden Information insbesondere zur ergänzenden Darstellung in der Kartendarstellung, wie z.B. graphische Darstellungen und Informationen zu Landmarks, Verkehrsinformationen und deren graphische Darstellung und/oder graphische Darstellungen und Informationen über Points-of-Interest, an das Kraftfahrzeug 2. Verkehrsinformationen in diesem Sinne können z.B. Informationen über Staus, Baustellen, Informationen über neue Straßen, Informationen über nicht mehr existierende Straßen, Informationen über gesperrte Straßen und/oder Informationen über neue oder aufgehobene Einbahnstraßen sein.

Zur Implementierung der drahtlosen Internetverbindung umfasst die Navigationsanordnung 1 Knoten 11, 12, 14, die einen drahtlosen Zugang in das Internet 15 ermöglichen. Dabei kann zwischen den Knoten 11, 12, 14 und dem Kraftfahrzeug 2 eine drahtlose Kommunikationsverbindung 7 aufgebaut werden. Die drahtlose Kommunikationsverbindung 7 ist insbesondere ein WLAN. Es kann aber auch vorgesehen sein, dass eine drahtlose Kommunikationsverbindung 7 als WIFI-Verbindung, WIMAXI-Verbindung, RFI-Verbindung, Mobilfunk-Verbindung, etc. implementiert ist. Es kann auch vorgesehen sein, dass - abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc..

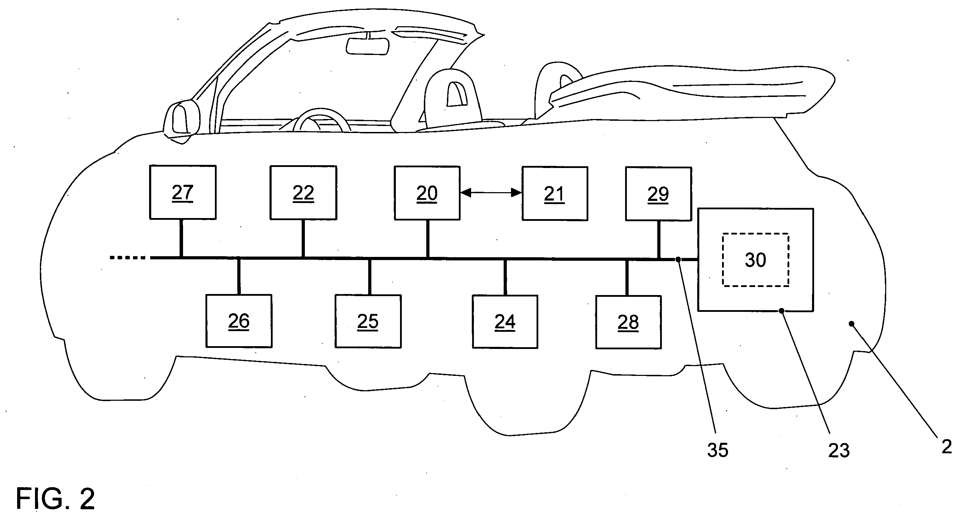

Fig. 2 zeigt ein Ausführungsbeispiel einer beispielhaften Implementierung des Kraftfahrzeuges 2 in einer Prinzipdarstellung. Das Kraftfahrzeug 2 umfasst eine als Touchscreen 21 ausgestaltete Mensch-Maschine-Schnittstelle zur Ausgabe des Routenvorschlags an einen Bediener des Kraftfahrzeuges 2. Dazu ist der Touchscreen 21 mittels einer Anzeigesteuerung 20 ansteuerbar, die mittels eines Bussystems 35 mit einer Internetschnittstelle 22 für die drahtlose Kommunikationsverbindung 7 verbunden ist. Der Touchscreen 21 kann - gemäß dem vorliegenden Ausführungsbeispiel - auch zur Bedienung eines Infotainmentsystems 24, eines Telefons 25 oder einer Klimaautomatik 26 genutzt werden.

Das Kraftfahrzeug 2 umfasst ein - im vorliegenden Ausführungsbeispiel in ein on-board-Navigationssystem 23 integriertes - Ortungssystem 30 zur Bestimmung der Position des Kraftfahrzeuges 2, der Ausrichtung des Kraftfahrzeuges 2 und/oder der on-board-Zeit in Abhängigkeit von in Fig. 1 mit Bezugszeichen 3 bezeichneten Satelliten gesendeten Signalen. Mittels des on-board-Navigationssystems 23 ist ein Routenvorschlag für das Kraftfahrzeug 2 zu einem mittels des Touchscreens 21 eingebbaren Ziel ermittelbar.

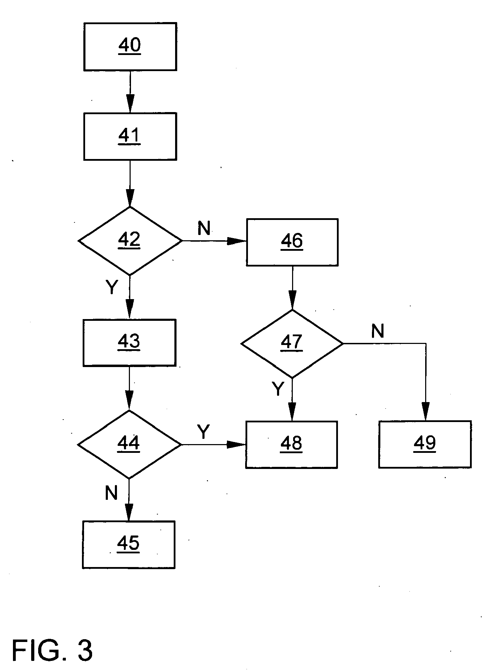

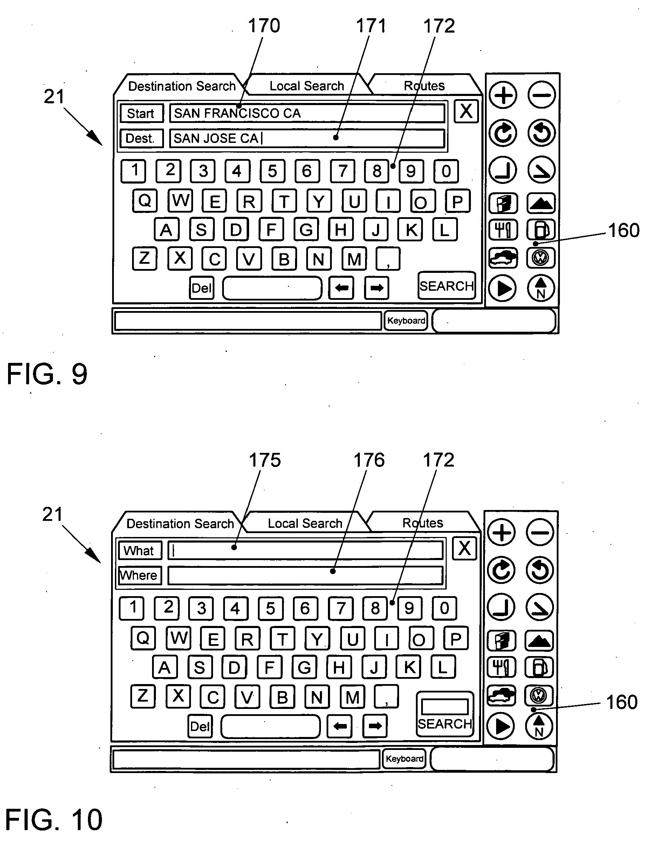

Fig. 3 zeigt ein Ausführungsbeispiel eines Verfahrens zur Unterstützung der Navigation des Kraftfahrzeuges 2. Dabei wird in einem Schritt 40 - wie z.B. in Fig. 9 und Fig. 10 beispielhaft dargestellt - ein Ziel, ein Point-of-Interest o. ä. eingegeben. Dem Schritt 40 folgt ein Schritt 41, in dem dieses Ziel bzw. dieser Point-of-Interest zusammen mit entsprechenden Navigationsinformationen, wie z.B. Kartendarstellungen, graphischen Darstellungen und Informationen zu Landmarks, Verkehrsinformationen und deren graphische Darstellung und/oder graphische Darstellungen und Informationen zu dem Point-of-Interest oder weiteren Points-of-Interest, in einer on-board-Datenbasis gesucht werden. Eine derartige Kartendarstellung kann eine Karte, ein Satellitenbild oder eine 3D-Graphik sein. Die Karte, das Satellitenbild bzw. die 3D-Graphik kann dabei z.B. in Draufsicht, in Vogelperspektive oder in first-person-view dargestellt werden. Eine on-board-Datenbasis kann z.B. in einem mit Bezugszeichen 28 bezeichneten Speicher gespeichert sein.

Dem Schritt 41 folgt eine Abfrage 42, ob das gesuchte Ziel bzw. der gesuchte Point-of-Interest zusammen mit entsprechenden Navigationsinformationen in der on-board-Datenbasis verfügbar ist. Ist das gesuchte Ziel bzw. der gesuchte Point-of-Interest zusammen mit entsprechenden Navigationsinformationen in der on-board-Datenbasis verfügbar, so folgt der Abfrage 42 ein Schritt 43, in dem auf dem Server 10 nach einem update patch für das gesuchte Ziel bzw. den gesuchten Point-of-Interest zusammen mit entsprechenden Navigationsinformationen gesucht wird. Wird kein derartiger update patch gefunden, so wird in einem Schritt 45 die in der on-board-Datenbasis gefundene Navigationsinformation mittels des Touchscreens 21 (ggf. zusammen mit einer Position des Kraftfahrzeuges 2 und/oder einem Routenvorschlag für das Kraftfahrzeug 2) dargestellt. Wird dagegen ein derartiger update patch gefunden, so folgt der Abfrage 44 ein Schritt 48.

Ergibt die Abfrage 42, dass das gesuchte Ziel bzw. der gesuchte Point-of-Interest zusammen mit entsprechenden Navigationsinformationen nicht in der on-board-Datenbasis verfügbar ist, so folgt der Abfrage 42 ein dem Schritt 43 entsprechender Schritt 46 sowie eine der Abfrage 44 entsprechende Abfrage 47. Wird ein update patch gefunden, so folgt der Abfrage 47 der Schritt 48. Wird dagegen kein update patch gefunden, so folgt der Abfrage 47 ein Schritt 49, in dem eine der gesuchten Navigationsinformation entsprechende sekundäre Navigationsinformation mittels des Touchscreens 21 (ggf. zusammen mit einer Position des Kraftfahrzeuges 2 und/oder einem Routenvorschlag für das Kraftfahrzeug 2) dargestellt wird. Eine derartige sekundäre Navigationsinformation kann eine übliche in dem Navigationssystem 23 oder auf einer zugeordneten CD oder DVD gespeicherte Navigationsinformation sein.

In dem Schritt 48 werden die verfügbaren Navigationsinformationen von dem Server 10 an das Kraftfahrzeug 2 - im vorliegenden Ausführungsbeispiel kodiert bzw. komprimiert - übertragen, wobei den einzelnen Navigationsinformationen Prioritäten zugeordnet sind, und wobei die Reihenfolge der Übertragung der Navigationsinformationen in Abhängigkeit der Höhe ihrer jeweiligen Priorität erfolgt. Dabei ist insbesondere vorgesehen, dass eine Navigationsinformation mit einer hohen Priorität vor einer Navigationsinformation mit einer niedrigen Priorität übertragen wird.

Der Server 10 verfügt über einen Priorisierer 50, der die Priorität 58 einer Navigationsinformation bestimmt.

Die Priorität 58 der Navigationsinformation ist abhängig von deren Wiedererkennungswert 55. Dabei ist einer Navigationsinformation mit einem hohen Wiedererkennungswert eine höhere Priorität zugeordnet als einer Navigationsinformation mit einem geringen Wiedererkennungswert. Ein hoher Wiedererkennungswert ist eine gewisse Eigentümlichkeit bzw. ein optisches Hervorstechen. Eine Navigationsinformation mit einem hohen Wiedererkennungswert soll insbesondere eine Navigationsinformation sein, die einen besonders guten Anhalt für eine Orientierung bietet. Eine Navigationsinformation mit einem hohen Wiedererkennungswert soll insbesondere eine Navigationsinformation sein, die sich deutlich von ihrer Umgebung unterscheidet. Dabei ist insbesondere auch vorgesehen, dass Landmarks mit einem hohen Wiedererkennungswert detaillierter dargestellt werden als Landmarks mit einem geringen Wiedererkennungswert. So kann z.B. das Transamerika-Gebäude in San Francisco detaillierter abgebildet werden als ein üblicher Wohnblock.

Es kann weiterhin vorgesehen sein, dass die Priorität 58 abhängig von der Erneuerungsrate 51 der Navigationsinformation oder ihrer üblichen Erneuerungsrate ist. Dabei kann vorgesehen sein, dass den Navigationsinformationen mit einer hohen Dynamik eine höhere Priorität zugeordnet ist. So können z.B. Verkehrsinformationen und Informationen über die Verfügbarkeit von Parkplätzen hohe Prioritäten zugeordnet werden. Es kann alternativ oder zusätzlich vorgesehen sein, dass die Priorität 58 der Navigationsinformation abhängig von ihrer Größe 52 ist. Dabei kann insbesondere vorgesehen sein, dass den Navigationsinformationen mit einer geringen Bandbreite bzw. Größe eine höhere Priorität zugeordnet ist. So können z.B. Verkehrsinformationen, Informationen über die Verfügbarkeit von Parkplätzen und Informationen über Points-Of-Interest aufgrund ihrer geringeren Größe höhere Prioritäten zugeordnet werden als einer Kartendarstellung. In Bezug auf eine Kartendarstellung kann z.B. vorgesehen sein, dass eine zweidimensionale Karte eine höhere Priorität besitzt als eine dreidimensionale Vektor-Kartendarstellung. In Bezug auf eine Kartendarstellung kann darüber hinaus z.B. vorgesehen sein, dass eine dreidimensionale Vektor-Kartendarstellung eine höhere Priorität besitzt als ein Satellitenbild oder eine photorealistische (dreidimensionale) Kartendarstellung.

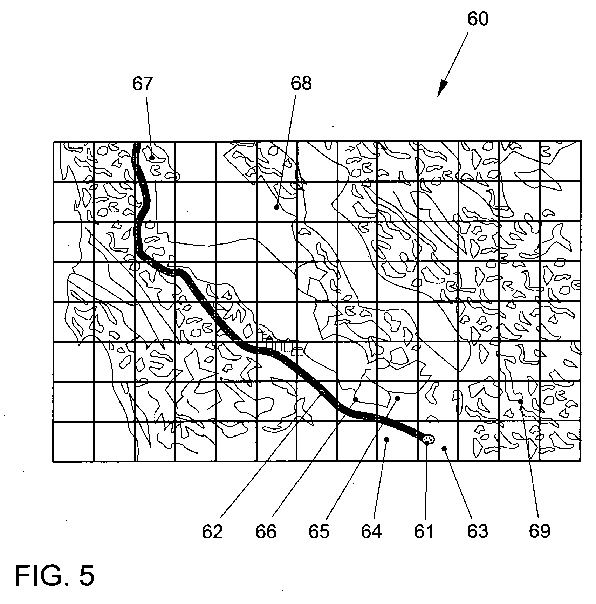

Alternativ oder zusätzlich kann die Priorität 58 der Navigationsinformation - wie beispielhaft unter Bezugnahme auf Fig. 5 erläutert - auch abhängig von deren Abstand 53 zur Position 61 des Kraftfahrzeuges 2 und/oder von deren Abstand 54 zu einem Routenvorschlag 62 für das Kraftfahrzeug 2 sein. Bezugszeichen 60 in Fig. 5 bezeichnet eine in Kartenausschnitte 63, 64, 65, 66, 57, 68, 69 untereilte Kartendarstellung. Im vorliegenden Ausführungsbeispiel ist vorgesehen, dass dem Kartenausschnitt 63 eine höhere Priorität zugeordnet wird als den Kartenausschnitten 64, 65, 66. Den Kartenausschnitten 64, 65, 66 wird wiederum eine höhere Priorität zugeordnet als dem Kartenausschnitt 67 und dem Kartenausschnitt 67 wird wiederum eine höhere Priorität zugeordnet als den Kartenausschnitten 68, 69. Darüber hinaus kann vorgesehen sein, dass die Kartenausschnitte 68, 69 mit einer geringeren Auflösung übertragen werden als die Kartenausschnitte 63, 64, 65, 66, 67.

Alternativ oder zusätzlich kann die Priorität 58 der Navigationsinformation auch abhängig von deren Sicherheitsrelevanz 56 und/oder einem Benutzerprofil 57 sein. Dabei kann insbesondere vorgesehen sein, dass den Navigationsinformationen mit Sicherheitsrelevanz eine höhere Priorität zugeordnet ist. Unter dem Benutzerprofil 57 soll sowohl in diesem Sinne ein Benutzerprofil im engeren Sinne als auch eine Eingabe eines Benutzers des Kraftfahrzeuges 2 zur Einstellung oder Beeinflussung der Priorität 58 verstanden werden.

In dem Schritt 48 werden die kodierten bzw. komprimierten Navigationsinformationen zudem, z.B. in dem Speicher 28, gespeichert, und mittels eines Dekodierers 29 dekodiert bzw. dekomprimiert, wobei die Reihenfolge des Dekodierens bzw. Dekomprimierens der Navigationsinformationen in Abhängigkeit der Höhe ihrer Priorität erfolgt. Dabei ist insbesondere vorgesehen, dass eine Navigationsinformation mit einer hohen Priorität vor einer Navigationsinformation mit einer niedrigen Priorität dekodiert bzw. dekomprimiert wird. Anschließend werden die dekodierten bzw. dekomprimierten Navigationsinformationen in die on-board-Datenbasis aufgenommen und mittels des Touchscreens 21 dargestellt. Es kann auch vorgesehen sein, dass die kodierten bzw. komprimierten Navigationsinformation in die on-board-Datenbasis aufgenommen werden.

Es kann vorgesehen sein, dass in Bezug auf Satellitenbilder zwischen verschiedenen Modi, wie z.B. Nachtmodus, Tagmodus, saisonal abhängige Modi, wetterabhängige Modi, etc., gewählt werden kann. Es kann auch vorgesehen sein, dass eine Karte, ein Satellitenbild und/oder eine 3D-Graphik um Informationen von on-board-Sensorik 27 (Night-Vision, Straßenzustandssensorik) ergänzt wird.

Es kann vorgesehen sein, dass ein Routenvorschlag mittels des Navigationssystems 23 ermittelt wird. Alternativ oder zusätzlich kann aber auch vorgesehen sein, dass ein die Position des Kraftfahrzeuges 2, die Ausrichtung des Kraftfahrzeuges 2 und/oder die on-board-Zeit sowie ein mittels des Touchscreens 21 eingegebenes Ziel über die Internetschnittstelle 22 an den Server 10 übertragen werden, wobei die Position des Kraftfahrzeuges 2 auch eine Größe sein kann, aus der die Position des Kraftfahrzeuges 2 ermittelbar ist, wie z.B. von dem Kraftfahrzeug 2 empfangene GPS-Signale. Werden z.B. die von dem Kraftfahrzeug empfangenen GPS-Signale an den Server 10 übertragen, so ermittelt dieser die Position des Kraftfahrzeuges 2 und die Ausrichtung des Kraftfahrzeuges 2 sowie unter Umständen die on-board-Zeit. Gemäß der alternativen bzw. zusätzlichen Ausgestaltung ermittelt der Server 10 einen Routenvorschlag in Abhängigkeit der Position des Kraftfahrzeuges 2 und des eingegebenen Ziels und übermittelt diesen mittels der drahtlosen Kommunikationsverbindung 7 an das Kraftfahrzeug 2.

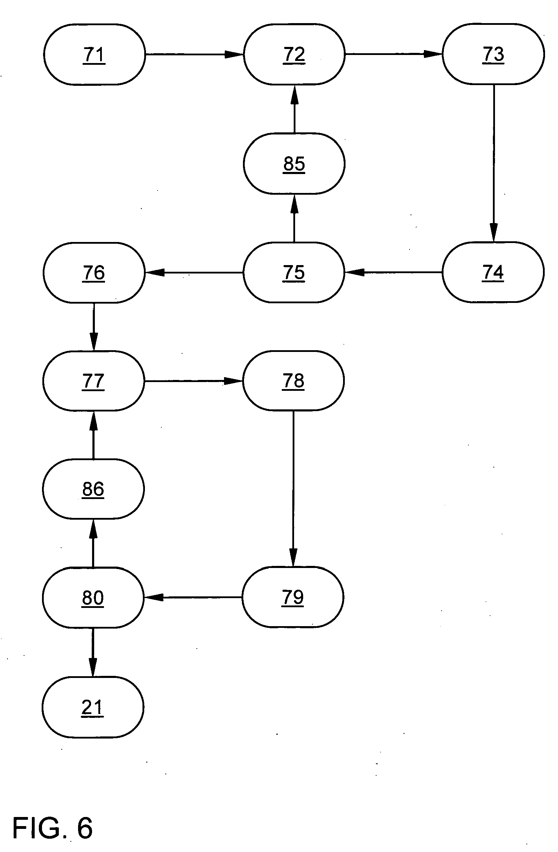

Der unter Bezugnahme auf Fig. 3 beschriebene Ablauf kann auch für Navigationsinformationen einer bestimmten Priorität oder einer Prioritätengruppe durchlaufen und anschließend für Navigationsinformationen einer geringeren Priorität oder Prioritätengruppe nochmals durchlaufen werden. Einen entsprechenden beispielhaften Datenfluss in Bezug auf das Durchlaufen eines die Schritte 40, 41, 43 und 48 umfassenden Pfades zeigt Fig. 6. Dabei sind nicht-graphische Navigationsinformationen in einer ersten Prioritätengruppe und graphische Navigationsinformationen in einer zweiten Prioritätengruppe zusammengefasst.

Angestoßen durch eine Eingabe gemäß Schritt 40 sucht eine lokale Suchmaschine 71 in einer on-board-Datenbasis 72 für nicht-graphische Navigationsinformationen (z.B. einem Streckenatlas). Anschließend sucht eine online Suchmaschine 73 in einer dem Server 10 zugeordneten Datenbasis 74 für nicht-graphische Navigationsinformationen, in der die nichtgraphischen Navigationsinformationen für die Übertragung komprimiert sind. Das Ergebnis dieser online-Suche ist eine XML-Datei 75 mit sortierten Orts- und GPS-Daten. Diese wird für das Speichern komprimiert. Die derart komprimierten Daten 85 werden als update in die on-board-Datenbasis 72 aufgenommen.

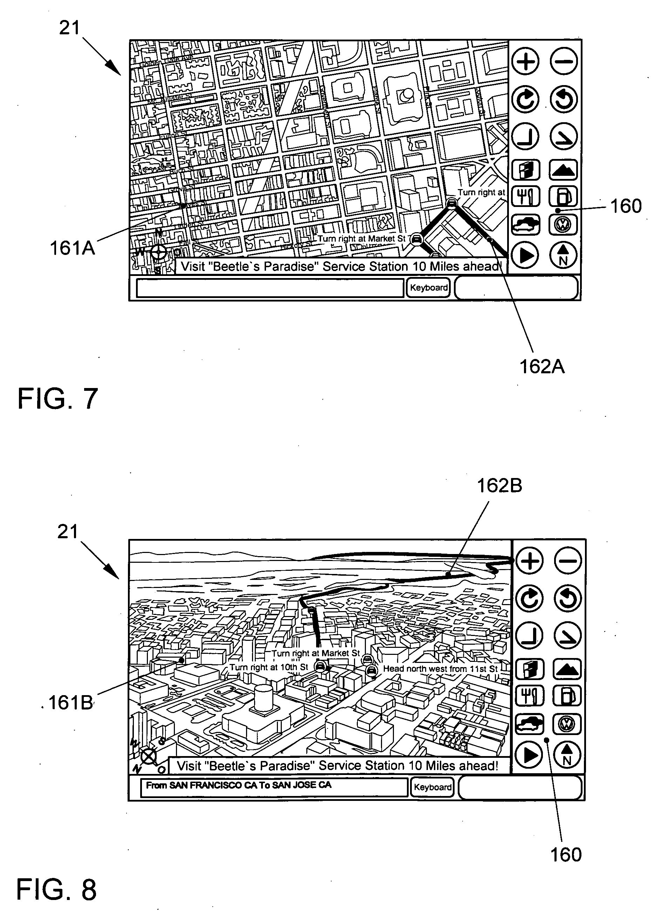

Zudem sucht eine lokale Suchmaschine 76 in einer on-board-Datenbasis 77 für graphische Navigationsinformationen, insbesondere Kartendarstellungen. Anschließend sucht eine online Suchmaschine 78 in einer dem Server 10 zugeordneten Datenbasis 79 für graphische Navigationsinformationen, in der die graphischen Navigationsinformationen für die Übertragung komprimiert sind. Das Ergebnis dieser online-Suche sind ausgesuchte graphische Navigationsinformationen 80. Diese werden für das Speichern komprimiert. Die derart komprimierten graphischen Navigationsinformationen 86 werden als update in die on-board-Datenbasis 77 aufgenommen. Zudem werden die gewünschten Navigationsinformationen mittels des Touchscreens 21 - wie beispielhaft unter Bezugnahme auf Fig. 7, Fig. 8, Fig. 11, Fig. 12, Fig. 13, Fig. 14 und Fig. 15 erläutert - dargestellt.

Die Komprimierung der XML-Datei 75 mit sortierten Orts- und GPS-Daten und den graphischen Navigationsinformationen kann z.B. mittels des Dekodieres 29 erfolgen, der in diesem Fall auch als Kodierer ausgestaltet ist. Alternativ werden die zur Übermittlung bereits kodierten Daten in die on-board-Datenbasis 72 bzw. in die on-board-Datenbasis 77 aufgenommen. Es ist insbesondere vorgesehen, dass die kodierten Daten editierbar und/oder suchbar sind. Zur Komprimierung werden z.B. größere Flächen, wie z.B. Gewässer und sich wiederholende Muster, wie z.B. Lichtmasten, stilisiert dargestellt. Darüber hinaus kann - wie bereits ausgeführt - vorgesehen sein, dass graphische Informationen in einem gewissen Abstand zur Position des Kraftfahrzeuges 2 und/oder eines Routenvorschlags für das Kraftfahrzeug 2 weniger detailliert dargestellt werden.

Fig. 7 zeigt ein Ausführungsbeispiel einer Draufsicht-Darstellung 161A eines in eine 3D-Graphik integrierten Routenvorschlags 162A mittels des Touchscreens 21. Neben der Draufsicht-Darstellung 161A der 3D-Graphik ist eine Bedienleiste 160 dargestellt. Mittels dieser Bedienleiste 160 kann die Darstellung verändert werden und/oder andere und/oder zusätzliche Funktionen aktiviert bzw. bedient werden. So kann mittels der Bedienleiste 160 die in Fig. 7 gewählte Draufsicht-Darstellung 161A der 3D-Graphik - wie in Fig. 8 dargestellt - in eine Vogelperspektive-Darstellung 161B verändert werden. Entsprechend wird der Routenvorschlag 162B in der Vogelperspektiven-Darstellung integriert dargestellt.

Fig. 9 zeigt ein Ausführungsbeispiel einer Anzeige einer Eingabemaske zur Eingabe eines Start- und eines Zielortes mittels des Touchscreens 21. In dem dargestellten Ausführungsbeispiel sind dazu ein Starteingabefeld 170 und Ziefeingabefeld 171 vorgesehen. Die Zieleingabe kann z.B. alphanumerisch durch eine dargestellte Tastatur 172 erfolgen. Alternativ oder zusätzlich kann die Zieleingabe auch durch Spracheingabe oder Schrifterkennung (insbesondere einer Schrifterkennung zur Identifikation asiatischer Schriftzeichen) erfolgen. Die Selektion eines Ortes kann auf einer Karte, einem Satellitenbild und/oder einer 3D-Graphik erfolgen. In diesem Fall ist in einer Ausgestaltung eine Zoomfunktion für die Karte, das Satellitenbild und/oder die 3D-Graphik vorgesehen. Der Startort kann auch die aktuelle Position des Kraftfahrzeugs 2 sein.

Es kann auch vorgesehen sein, dass - wie in Fig. 10 dargestellt - ein Bediener des Kraftfahrzeuges 2 ein bestimmtes Objekt (Restaurant, Landmark, Geschäft, Tankstelle, etc.) in einem bestimmten Such-Gebiet (Straße, Stadt, Postleitzahl, Kreis, etc.) suchen lassen kann. Dazu wird eine Eingabemaske mit einem Objekteingabefeld 175 zu Eingabe eines zu suchenden Objektes (Restaurant, Landmark, Geschäft, Tankstelle etc.) und ein Gebietseingabefeld 176 zu Eingabe des Such-Gebiets (Straße, Stadt, Postleitzahl, Kreis, etc.) dargestellt. Der Bediener kann anschließend einen Treffer aus den mittels dieser Suche ermittelten bzw. (z.B. in einer Karte, in einem Satellitenbild und/oder in einer 3D-Graphik) angebotenen Treffern aussuchen.

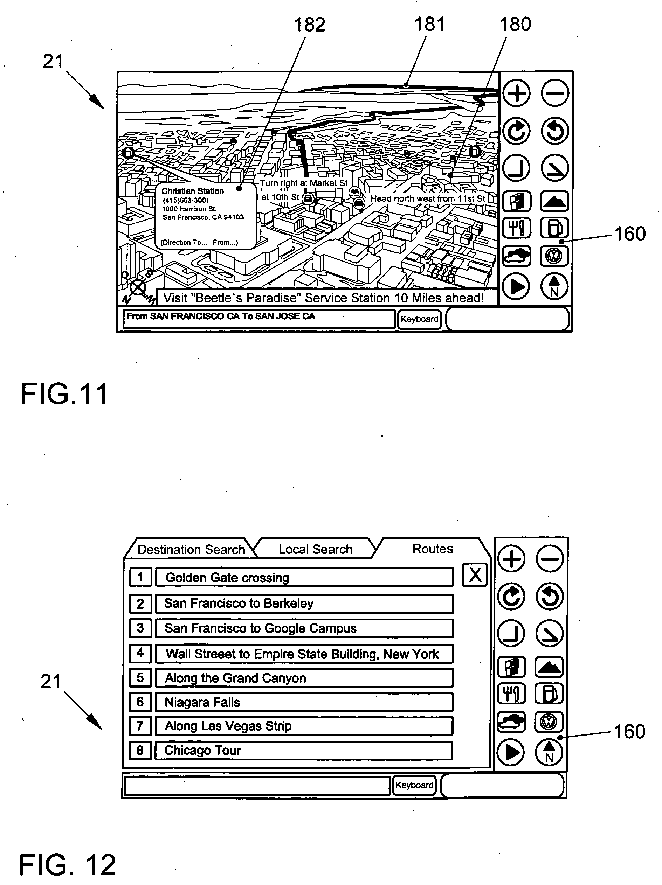

Erfolgt die Zieleingabe durch Spracheingabe so kann - wie in Fig. 11 dargestellt - eine graphische Bestätigung 182 der Spracheingabe erfolgen. Diese graphische Bestätigung 182 kann - wie in Fig. 11 dargestellt - z.B. (zeitlich begrenzt) eine Kartendarstellung überlagern. So zeigt das Ausführungsbeispiel gemäß Fig. 11 z.B. eine Vogelperspektiven-Darstellung 180 eines in eine 3D-Graphik integrierten Routenvorschlags 181 mittels des Touchscreens 21.

Es kann auch vorgesehen sein, dass bevorzugte Routen wählbar sind. So zeigt Fig. 12 ein Ausführungsbeispiel einer Anzeige zur Auswahl bevorzugter Routen mittels des Touchscreens 21.

Es kann auch eine automatische oder zumindest eine interaktiv-automatische Zielauswahl unter bestimmten Umständen vorgesehen sein. So kann vorgesehen sein, dass das Kraftfahrzeug 2 Betriebsinformationen des Kraftfahrzeuges 2 (mittels der drahtlosen Kommunikationsverbindung 7) sendet bzw. (mittels der drahtlosen Kommunikationsverbindung 7) an den Server 10 überträgt. Eine Betriebsinformation des Kraftfahrzeuges in diesem Sinne kann z.B. der Status der Tankfüllung, der Ölstand, oder eine Information über einen Defekt sein. Wird z.B. übertragen, dass der Tank fast leer ist, so wird eine Navigation zur nächsten Tankstelle angeboten und/oder vorgesehen. Wird z.B. übertragen, dass ein bestimmter Defekt vorliegt, so wird eine Navigation zur nächsten (geeigneten) Servicestation angeboten und/oder vorgesehen.

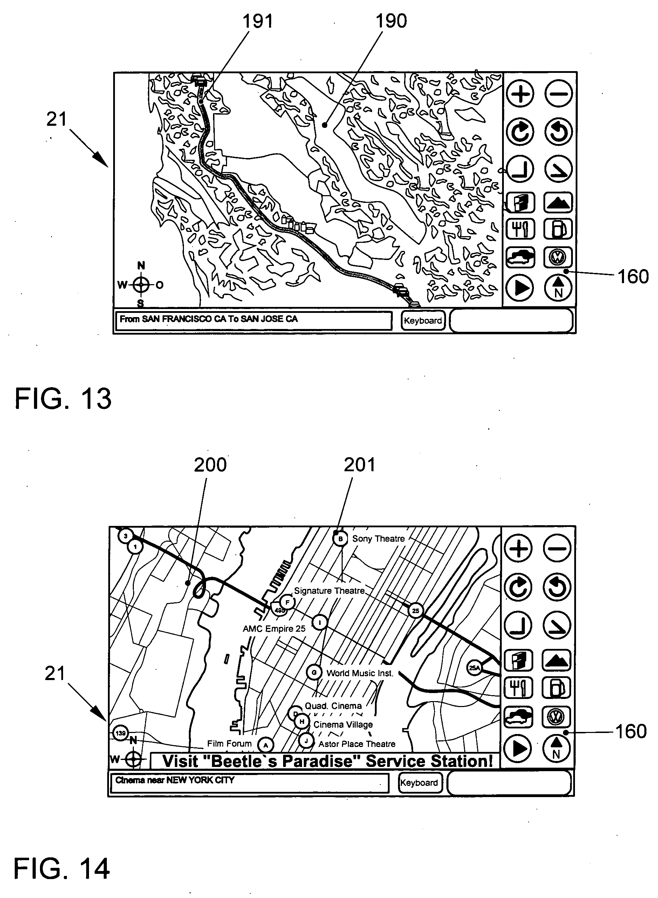

Fig. 13 zeigt ein Ausführungsbeispiel einer Anzeige einer Routenübersicht mittels des Touchscreens 21. Dabei bezeichnet Bezugszeichen 190 ein Satellitenbild und Bezugszeichen 191 einen Routenvorschlag. Die Routenübersicht kann auch, insbesondere aus der Vogelperspektive, in einem Fly-Through-Modus erfolgen.

Satellitenbilder 200 können - wie beispielhaft in Fig. 14 dargestellt - auch durch zusätzliche Informationen 201, wie z.B. Straßen, Straßennamen bzw. bezeichnungen, Gebäude, Fahrzeuge, Verkehrsinformationen, (ggf. customized) POIs, call-out-boxes, Raststätten etc. überlagert bzw. ergänzt werden. Besondere Hinweise auf Raststätten oder Parkplätze können z.B. dann vorgesehen werden, wenn eine bestimmte Lenkdauer überschritten worden ist.

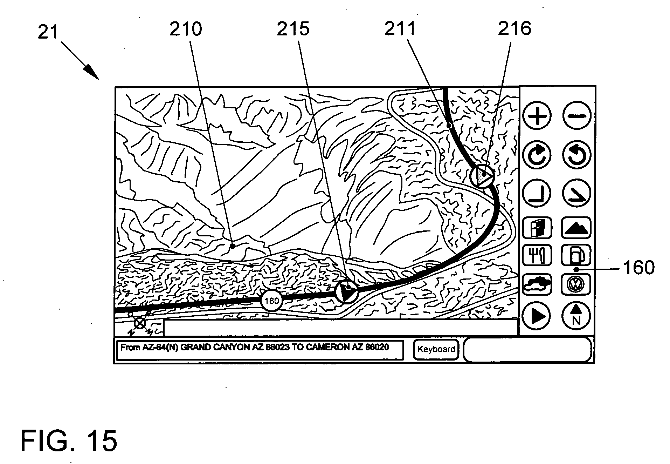

Es kann - wie in Fig. 15 dargestellt - auch eine follow-me-Funktion vorgesehen sein, bei der die Position 216 eines ausgewählten anderen Kraftfahrzeuges auf einer Karte, einem Satellitenbild und/oder einer 3D-Graphik 210, insbesondere zusammen mit der Position 215 des Kraftfahrzeuges 2, dargestellt wird. Darüber hinaus kann ein Routenvorschlag 211 dargestellt werden.

### Bezugszeichenliste

- 1: Navigationsanordnung
- 2: Kraftfahrzeug
- 3: Satellit
- 7: Kommunikationsverbindung
- 10: Server
- 11, 12, 14: Knoten
- 15: Internet
- 20: Anzeigesteuerung
- 21: Touchscreen
- 22: Schnittstelle
- 23: on-board-Navigationssystem
- 24: Infotainmentsystem
- 25: Telefon
- 26: Klimaautomatik
- 27: on-board-Sensorik
- 28: Speicher
- 29: Dekodieren
- 30: Ortungssystem
- 35: Bussystem
- 40, 41, 43, 45, 46, 48, 49: Schritt
- 42, 44, 47: Abfrage
- 50: Priorisierer
- 51: Erneuerungsrate
- 52: Größe
- 53: Abstand zu der Position eines Kraftfahrzeuges
- 54: Abstand zu einem Routenvorschlag für ein Kraftfahrzeug
- 55: Wiedererkennungswert
- 56: Sicherheitsrelevanz
- 57: Benutzerprofil
- 58: Priorität
- 60: Kartendarstellung
- 61, 215: Position eines Kraftfahrzeuges
- 62, 162A, 162B, 181, 191, 211: Routenvorschlag
- 63, 64, 65, 66, 67, 68, 69: Kartenausschnitt
- 71, 76: lokale Suchmaschine
- 72: on-board-Datenbasis für nicht-graphische Navigationsinformationen
- 73, 78: online Suchmaschine
- 74: einem Server zugeordnete Datenbasis für nicht-graphische Navigationsinformationen
- 75: XML-Datei
- 77: on-board-Datenbasis für graphische Navigationsinformationen
- 79: einem Server zugeordnete Datenbasis für graphische Navigationsinformationen
- 80: ausgesuchte graphische Navigationsinformationen
- 85: komprimierte Daten
- 86: komprimierte graphische Navigationsinformationen
- 160: Bedienleiste
- 161A: Draufsicht-Darstellung
- 161B, 180: Vogelperspektiven-Darstellung
- 170: Starteingabefeld
- 171: Zieleingabefeld
- 172: Tastatur
- 175: Objekteingabefeld
- 176: Gebietseingabefeld
- 182: graphische Bestätigung
- 190,200: Satellitenbild
- 201: zusätzliche Informationen
- 210: 3D-Graphik
- 216: Position eines ausgewählten anderen Kraftfahrzeuges

## Patentansprüche

1. Navigationsanordnung (1) für ein Kraftfahrzeug (2), die Navigationsanordnung (1) umfassend:
ein Kraftfahrzeug (2);
einen räumlich von dem Kraftfahrzeug (2) getrennten Server (10);
eine drahtlose Kommunikationsverbindung (7) zwischen dem Server (10) und dem Kraftfahrzeug (2) zur zeitlich versetzten Übertragung einer ersten Navigationsinformation und zumindest einer zweiten Navigationsinformation von dem Server (10) an das Kraftfahrzeug (2), wobei der ersten Navigationsinformation eine erste Priorität (58) und der zweiten Navigationsinformation eine zweite Priorität (58) zugeordnet ist, und wobei die Reihenfolge der Übertragung der ersten Navigationsinformation und der zweiten Navigationsinformation abhängig von der Höhe der Priorität (58) ist; und
eine in dem Kraftfahrzeug (2) angeordnete Mensch-Maschine-Schnittstelle (21) zur Ausgabe der ersten Navigationsinformation und der zweiten Navigationsinformation an einen Bediener des Kraftfahrzeuges(2),
**dadurch gekennzeichnet, dass**
die Priorität (58) einer Navigationsinformation abhängig von deren Wiedererkennungswert (55) ist, wobei einer Navigationsinformation mit einem hohen Wiedererkennungswert (55) eine höhere Priorität (58) zugeordnet wird, wobei ein hoher Wiedererkennungswert (55) eine Eigentümlichkeit oder ein optisches Hervorstechen der Navigationsinformation ist.

2. Navigationsanordnung (1) nach Anspruch 1, wobei die Priorität (58) einer Navigationsinformation abhängig von ihrer Erneuerungsrate (51) oder ihrer üblichen Erneuerungsrate (51) ist.

3. Navigationsanordnung (1) nach Anspruch 1, wobei die Priorität (58) einer Navigationsinformation abhängig von ihrer Größe (52) ist.

4. Navigationsanordnung (1) nach Anspruch 1, wobei die Priorität (58) einer Navigationsinformation abhängig von deren Abstand (53) zur Position (61, 215) des Kraftfahrzeuges (2) ist.

5. Navigationsanordnung (1) nach Anspruch 1, wobei die Priorität (58) einer Navigationsinformation abhängig von deren Abstand (54) zu einem Routenvorschlag (62, 162A, 162B, 181, 191, 211) für das Kraftfahrzeug (2) ist.

6. Navigationsanordnung (1) nach Anspruch 1, wobei die Priorität (58) einer Navigationsinformation einen Ausschnitt (63-69) einer Kartendarstellung (60) umfasst.

7. Navigationsanordnung (1) nach Anspruch 6, wobei die Priorität (58) des Ausschnitts (63-69) der Kartendarstellung (60) abhängig von dessen Abstand (53) zur Position des Kraftfahrzeuges (2) ist.

8. Navigationsanordnung (1) nach Anspruch 6, wobei die Priorität (58) des Ausschnitts der Kartendarstellung (60) abhängig von dessen Abstand (54) zu einem Routenvorschlag (62, 162A, 162B, 181, 191, 211) für das Kraftfahrzeug (2) ist.

9. Navigationsanordnung (1) nach Anspruch 1, wobei die Priorität (58) einer Navigationsinformation abhängig von deren Sicherheitsrelevanz (56) ist.

10. Navigationsanordnung (1) nach Anspruch 1, wobei die Priorität (58) einer Navigationsinformation von einem Bediener einstellbar ist.

11. Navigationsanordnung (1) nach Anspruch 1, wobei die Priorität (58) einer Navigationsinformation abhängig von einem Benutzerprofil (57) ist.

12. Navigationsanordnung (1) nach Anspruch 1, wobei die Mensch-Maschine-Schnittstelle einen Monitor (21) umfasst.

13. Navigationsanordnung (1) nach Anspruch 1, wobei das Kraftfahrzeug (2) ein Navigationssystem (23) umfasst.

14. Navigationsanordnung (1) nach Anspruch 1, wobei die erste Navigationsinformation und die zweite Navigationsinformation kodiert sind, wobei das Kraftfahrzeug (2) einen Dekodierer (29) zum Dekodieren der ersten kodierten Navigationsinformation und der zweiten kodierten Navigationsinformation umfasst, und wobei die Reihenfolge des Dekodierens der ersten Navigationsinformation und der zweiten Navigationsinformation abhängig von der Höhe der Priorität (58) ist.

15. Navigationsanordnung (1) nach Anspruch 1, wobei das Kraftfahrzeug (2) einen Speicher (28) mit einer Kartendarstellung (60) umfasst.

16. Navigationsanordnung (1) nach Anspruch 1, wobei der Server (10) als off-board-Navigationssystem zur Berechnung eines Routenvorschlags (62, 162A, 162B, 181, 191, 211) für das Kraftfahrzeug (2) ausgestaltet ist.

17. Navigationsanordnung nach Anspruch 16, wobei der Routenvorschlag (62, 162A, 162B, 181, 191, 211) zur Übertragung vor der ersten Navigationsinformation und der zweiten Navigationsinformation vorgesehen ist.

18. Verfahren zur Unterstützung der Navigation eines Kraftfahrzeuges (2), das Verfahren umfassend:
Zuordnung einer ersten Priorität (58) zu einer ersten Navigationsinformation;
Zuordnung einer zweiten Priorität (58) zu einer zweiten Navigationsinformation; und
zeitlich versetzte Übertragung der ersten Navigationsinformation und der zweiten Navigationsinformation an das Kraftfahrzeug (2), wobei die Reihenfolge der Übertragung der ersten Navigationsinformation und der zweiten Navigationsinformation in Abhängigkeit der Höhe der Priorität (58) erfolgt,
**dadurch gekennzeichnet, dass**
die Priorität (58) einer Navigationsinformation abhängig von deren Wiedererkennuhgswert (55) ist, wobei einer Navigationsinformation mit einem hohen Wiedererkennungswert (55) eine höhere Priorität (58) zugeordnet wird, wobei ein hoher Wiedererkennungswert (55) eine Eigentümlichkeit oder ein optisches Hervorstechen der Navigationsinformation ist.

19. Verfahren nach Anspruch 18; das Verfahren weiterhin umfassend:
Ausgabe der ersten Navigationsinformation oder der zweiten Navigationsinformation an einen Bediener des Kraftfahrzeuges (2).

20. Verfahren nach Anspruch 18; das Verfahren weiterhin umfassend:
Ausgabe der ersten Navigationsinformation und der zweiten Navigationsinformation an einen Bediener des Kraftfahrzeuges (2).

21. Verfahren nach Anspruch 18, wobei die Priorität (58) einer Navigationsinformation in Abhängigkeit von ihrer Erneuerungsrate (51) oder ihrer üblichen Erneuerungsrate (51) bestimmt wird.

22. Verfahren nach Anspruch 18, wobei die Priorität (58) einer Navigationsinformation in Abhängigkeit von ihrer Größe (52) bestimmt wird.

23. Verfahren nach Anspruch 18, wobei die Priorität (58) einer Navigationsinformation in Abhängigkeit von deren Abstand (53) zur Position (61, 215) des Kraftfahrzeuges (2) bestimmt wird.

24. Verfahren nach Anspruch 18, wobei die Priorität (58) einer Navigationsinformation in Abhängigkeit von deren Abstand (54) zu einem Routenvorschlag (62, 162A, 162B, 181, 191, 211) für das Kraftfahrzeug (2) bestimmt wird.

25. Verfahren nach Anspruch 18, wobei die Priorität (58) einer Navigationsinformation in Abhängigkeit von deren Sicherheitsrelevanz (56) bestimmt wird.

26. Verfahren nach Anspruch 18, wobei die Priorität (58) einer Navigationsinformation in Abhängigkeit von einem Benutzerprofil (57) bestimmt wird.

27. Verfahren nach Anspruch 18; das Verfahren weiterhin umfassend:
Kodieren der ersten Navigationsinformation und der zweiten Navigationsinformation vor deren Übertragung an das Kraftfahrzeug (2); und
Dekodieren der ersten kodierten Navigationsinformation und der zweiten kodierten Navigationsinformation nach deren Übertragung an das Kraftfahrzeug (2), wobei die Reihenfolge des Dekodierens der ersten Navigationsinformation und der zweiten Navigationsinformation abhängig von der Höhe der Priorität (58) erfolgt.

## Claims

1. Navigation arrangement (1) for a motor vehicle (2), the navigation arrangement (1) comprising:
a motor vehicle (2);
a server (10) that is physically separate from the motor vehicle (2);
a wireless communication link (7) between the server (10) and the motor vehicle (2) for time-staggered transmission of a first navigation information item and
at least one second navigation information item from the server (10) to the motor vehicle (2), wherein the first navigation information item has a first associated priority (58) and the second navigation information item has a second associated priority (58),
and wherein the order of transmission of the first navigation information item and the second navigation information item is dependent on the level of priority (58); and
a man/machine interface (21), arranged in the motor vehicle (2), for outputting the first navigation information item and the second navigation information item to a user of the motor vehicle (2),
**characterized in that**
the priority (58) of a navigation information item is dependent on the recognition value (55) thereof,
wherein a navigation information item having a high recognition value (55) is assigned a higher priority (58), wherein a high recognition value (55) is a peculiarity or a visual prominence of the navigation information item.

2. Navigation arrangement (1) according to Claim 1, wherein the priority (58) of a navigation information item is dependent on its refresh rate (51) or its usual refresh rate (51).

3. Navigation arrangement (1) according to Claim 1, wherein the priority (58) of a navigation information item is dependent on its magnitude (52).

4. Navigation arrangement (1) according to Claim 1, wherein the priority (58) of a navigation information item is dependent on the distance (53) thereof from the position (61, 215) of the motor vehicle (2).

5. Navigation arrangement (1) according to Claim 1, wherein the priority (58) of a navigation information item is dependent on the distance (54) thereof from a route proposal (62, 162A, 162B, 181, 191, 211) for the motor vehicle (2).

6. Navigation arrangement (1) according to Claim 1, wherein the priority (58) of a navigation information item comprises a detail (63-69) from a map representation (60).

7. Navigation arrangement (1) according to Claim 6, wherein the priority (58) of the detail (63-69) from the map representation (60) is dependent on the distance (53) of said detail from the position of the motor vehicle (2).

8. Navigation arrangement (1) according to Claim 6, wherein the priority (58) of the detail from the map representation (60) is dependent on the distance (54) of said detail from a route proposal (62, 162A, 162B, 181, 191, 211) for the motor vehicle (2).

9. Navigation arrangement (1) according to Claim 1, wherein the priority (58) of a navigation information item is dependent on the safety relevance (56) thereof.

10. Navigation arrangement (1) according to Claim 1, wherein the priority (58) of a navigation information item can be adjusted by a user.

11. Navigation arrangement (1) according to Claim 1, wherein the priority (58) of a navigation information item is dependent on a user profile (57).

12. Navigation arrangement (1) according to Claim 1, wherein the man/machine interface comprises a monitor (21).

13. Navigation arrangement (1) according to Claim 1, wherein the motor vehicle (2) comprises a navigation system (23).

14. Navigation arrangement (1) according to Claim 1, wherein the first navigation information item and the second navigation information item are coded, wherein the motor vehicle (2) comprises a decoder (29) for decoding the first coded navigation information item and the second coded navigation information item, and wherein the order of decoding of the first navigation information item and the second navigation information item is dependent on the level of the priority (58).

15. Navigation arrangement (1) according to Claim 1, wherein the motor vehicle (2) comprises a memory (28) having a map representation (60).

16. Navigation arrangement (1) according to Claim 1, wherein the server (10) is embodied as an offboard navigation system for computing a route proposal (62, 162A, 162B, 181, 191, 211) for the motor vehicle (2).

17. Navigation arrangement according to Claim 16, wherein the route proposal (62, 162A, 162B, 181, 191, 211) is provided for transmission before the first navigation information item and the second navigation information item.

18. Method for assisting the navigation of a motor vehicle (2), the method comprising:
assignment of a first priority (58) to a first navigation information item;
assignment of a second priority (58) to a second navigation information item; and
time-staggered transmission of the first navigation information item and the second navigation information item to the motor vehicle (2), wherein the order of transmission of the first navigation information item and the second navigation information item is provided on the basis of the level of the priority (58),
**characterized in that**
the priority (58) of a navigation information item is dependent on the recognition value (55) thereof, wherein a navigation information item having a high recognition value (55) is assigned a higher priority (58), wherein a high recognition value (55) is a peculiarity or a visual prominence of the navigation information item.

19. Method according to Claim 18, the method additionally comprising:
output of the first navigation information item or the second navigation information item to a user of the motor vehicle (2).

20. Method according to Claim 18, the method additionally comprising:
output of the first navigation information item and the second navigation information item to a user of the motor vehicle (2).

21. Method according to Claim 18, wherein the priority (58) of a navigation information item is determined on the basis of its refresh rate (51) or its usual refresh rate (51).

22. Method according to Claim 18, wherein the priority (58) of a navigation information item is determined on the basis of its magnitude (52).

23. Method according to Claim 18, wherein the priority (58) of a navigation information item is determined on the basis of the distance (53) thereof from the position (61, 215) of the motor vehicle (2).

24. Method according to Claim 18, wherein the priority (58) of a navigation information item is determined on the basis of the distance (54) thereof from a route proposal (62, 162A, 162B, 181, 191, 211) for the motor vehicle (2).

25. Method according to Claim 18, wherein the priority (58) of a navigation information item is determined on the basis of the safety relevance (56) thereof.

26. Method according to Claim 18, wherein the priority (58) of a navigation information item is determined on the basis of a user profile (57).

27. Method according to Claim 18, the method additionally comprising:
coding of the first navigation information item and the second navigation information item before the transmission thereof to the motor vehicle (2); and
decoding of the first coded navigation information item and the second coded navigation information item after the transmission thereof to the motor vehicle (2), wherein the order of decoding of the first navigation information item and the second navigation information item is provided on the basis of the level of the priority (58).

## Revendications

1. Dispositif de navigation (1) pour un véhicule automobile (2), le dispositif de navigation (1) comprenant :
un véhicule automobile (2) ;
un serveur (10) séparé spatialement du véhicule automobile (2) ;
une liaison de communication sans fil (7) entre le serveur (10) et le véhicule automobile (2) à des fins de transmission décalée temporellement d'une première information de navigation et d'au moins une deuxième information de navigation à partir du serveur (10) au véhicule automobile (2), dans lequel une première priorité (58) est affectée à la première information de navigation et une deuxième priorité (58) est affectée à la deuxième information de navigation et dans lequel la séquence de transmission de la première information de navigation et de la deuxième information de navigation dépend de la hauteur de la priorité (58) ; et
une interface homme-machine (21) disposée sur le véhicule automobile (2) à des fins d'émission de la première information de navigation et de la deuxième information de navigation à un conducteur du véhicule automobile (2),
**caractérisé en ce que**
la priorité (58) d'une information de navigation dépend de sa valeur de reconnaissance (55), dans lequel une priorité plus haute (58) est affectée à une information de navigation avec une valeur de reconnaissance haute (55), dans lequel une valeur de reconnaissance plus haute (55) est une particularité ou un détail marquant optique de l'information de navigation.

2. Dispositif de navigation (1) selon la revendication 1, dans lequel la priorité (58) d'une information de navigation dépend de son taux de renouvellement (51) ou de son taux de renouvellement (51) habituel.

3. Dispositif de navigation (1) selon la revendication 1, dans lequel la priorité (58) d'une information de navigation dépend de sa taille (52).

4. Dispositif de navigation (1) selon la revendication 1, dans lequel la priorité (58) d'une information de navigation dépend de sa distance (53) par rapport à la position (61, 215) du véhicule automobile (2).

5. Dispositif de navigation (1) selon la revendication 1, dans lequel la priorité (58) d'une information de navigation dépend de sa distance (54) par rapport à une suggestion de route (62, 162A, 162B, 181, 191, 211) pour le véhicule automobile (2).

6. Dispositif de navigation (1) selon la revendication 1, dans lequel la priorité (58) d'une information de navigation comprend un extrait (63-69) d'un affichage cartographique (60).

7. Dispositif de navigation (1) selon la revendication 6, dans lequel la priorité (58) de l'extrait (63-69) de l'affichage cartographique (60) dépend de sa distance (53) par rapport à a position du véhicule automobile (2).

8. Dispositif de navigation (1) selon la revendication 6, dans lequel la priorité (58) de l'extrait de l'affichage cartographique (60) dépend de sa distance (54) par rapport à une suggestion de route (62, 162A, 162B, 181, 191, 211) pour le véhicule automobile (2).

9. Dispositif de navigation (1) selon la revendication 1, dans lequel la priorité (58) d'une information de navigation dépend de son importance pour la sécurité (56).

10. Dispositif de navigation (1) selon la revendication 1, dans lequel la priorité (58) d'une information de navigation peut être réglée par un conducteur.

11. Dispositif de navigation (1) selon la revendication 1, dans lequel la priorité (58) d'une information de navigation dépend d'un profil d'utilisateur (57).

12. Dispositif de navigation (1) selon la revendication 1, dans lequel l'interface homme-machine comprend un moniteur (21).

13. Dispositif de navigation (1) selon la revendication 1, dans lequel le véhicule automobile (2) comprend un système de navigation (23).

14. Dispositif de navigation (1) selon la revendication 1, dans lequel la première information de navigation et la deuxième information de navigation sont codées, dans lequel le véhicule automobile (2) comprend un décodeur (29) pour décoder la première information de navigation codée et la deuxième information de navigation codée et dans lequel la séquence du décodage de la première information de navigation et de la deuxième information de navigation dépend de la hauteur de la priorité (58).

15. Dispositif de navigation (1) selon la revendication 1, dans lequel le véhicule automobile (2) comprend une mémoire (28) avec un affichage cartographique (60).

16. Dispositif de navigation (1) selon la revendication 1, dans lequel le serveur (10) est conçu comme un système de navigation non embarqué pour calculer une suggestion de route (62, 162A, 162B, 181, 191, 211) pour le véhicule automobile (2).

17. Dispositif de navigation selon la revendication 16, dans lequel la suggestion de route (62, 162A, 162B, 181, 191, 211) est prévu afin de transmettre la première information de navigation et la deuxième information de navigation.

18. Procédé d'assistance à la navigation d'un véhicule automobile (2), le procédé comprenant :
l'affectation d'une première priorité (58) à une première information de navigation ;
l'affectation d'une deuxième priorité (58) à une deuxième information de navigation ; et
une transmission décalée temporellement de la première information de navigation et de la deuxième information de navigation au véhicule automobile (2), dans lequel la séquence de transmission de la première information de navigation et de la deuxième information de navigation a lieu en fonction de la hauteur de la priorité (58),
**caractérisé en ce que**
la priorité (58) d'une information de navigation dépend de sa valeur de reconnaissance (55), dans lequel une priorité plus haute (58) est affectée à une information de navigation avec une valeur de reconnaissance haute (55), dans lequel une valeur de reconnaissance plus haute (55) est une particularité ou un détail marquant optique de l'information de navigation.

19. Procédé selon la revendication 18, le procédé comprenant en outre :
l'émission de la première information de navigation ou de la deuxième information de navigation vers un conducteur du véhicule automobile (2).

20. Procédé selon la revendication 18, le procédé comprenant en outre :
l'émission de la première information de navigation et de la deuxième information de navigation vers un conducteur du véhicule automobile (2).

21. Procédé selon la revendication 18, dans lequel la priorité (58) d'une information de navigation est déterminée en fonction de son taux de renouvellement (51) ou de son taux de renouvellement habituel (51).

22. Procédé selon la revendication 18, dans lequel la priorité (58) d'une information de navigation est déterminée en fonction de sa taille (52).

23. Procédé selon la revendication 18, dans lequel la priorité (58) d'une information de navigation est déterminée en fonction de sa distance (53) par rapport à la position (61, 215) du véhicule automobile (2).

24. Procédé selon la revendication 18, dans lequel la priorité (58) d'une information de navigation est déterminée en fonction de sa distance (54) par rapport à une suggestion de route (62, 162A, 162B, 181, 191, 211) pour le véhicule automobile (2).

25. Procédé selon la revendication 18, dans lequel la priorité (58) d'une information de navigation est déterminée en fonction de son importance pour la sécurité (56).

26. Procédé selon la revendication 18, dans lequel la priorité (58) d'une information de navigation est déterminée en fonction d'un profil d'utilisateur (57).

27. Procédé selon la revendication 18, le procédé comprenant en outre :
le codage de la première information de navigation et de la deuxième information de navigation en vue de leur transmission au véhicule automobile (2) ; et
le décodage de la première information de navigation codée et de la deuxième information de navigation codée après leur transmission au véhicule automobile (2), dans lequel la séquence du décodage de la première information de navigation et de la deuxième information de navigation a lieu en fonction de la hauteur de la priorité (58).
